# EUROPÄISCHE PATENTSCHRIFT

(11) **EP 1 657 619 B1**
(45) Veröffentlichungstag und Bekanntmachung des Hinweises auf die Patenterteilung: **22.10.2008**
(21) Anmeldenummer: 05022630.7
(22) Anmeldetag: 18.10.2005
(51) Int. Cl.: G06F 1/14, H04J 3/06

(54) **Verfahren zur Zeitsynchronisation in einem zyklisch arbeitenden Kommunikationssystem**
Method for time synchronisation in a cyclically working communication system
Procédé de synchronisation temporelle dans un système de communication cyclique

(30) Priorität: 15.11.2004 DE 102004055105
(43) Veröffentlichungstag der Anmeldung: 17.05.2006
(73) Patentinhaber: Bosch Rexroth AG, 70184 Stuttgart (DE)
(72) Erfinder: Schultze, Stephan, 97816 Lohr am Main (DE)

(56) Entgegenhaltungen:
- EP-A2- 1 355 459
- WO-A-00/28683
- WO-A-03/026113
- DE-U1- 29 512 154
- US-A- 5 059 926

## Beschreibung

Die Erfindung betrifft ein Verfahren zur Zeitsynchronisation von über ein zyklisch arbeitendes Kommunikationssystem verbundenen Teilnehmern, wobei eine Zeitinformation an die zu synchronisierenden Teilnehmer übertragen wird. Die Erfindung betrifft weiterhin Teilnehmer eines solchen Kommunikationssystems sowie das Kommunikationssystem selbst.

### Stand der Technik

Eine hochpräzise Uhrzeitsynchronisation von Teilnehmern in Kommunikationssystemen gilt als Basis vieler zukünftiger Echtzeitanwendungen im Automatisierungs- und Messtechnik-Umfeld. Das Vorhandensein präziser Zeitinformationen in Endgeräten (Teilnehmern) erlaubt die Realisierung von verteilten hochsynchronen Prozessen, wie sie bspw. in Motion Control Anwendungen, der Mess- und Steuertechnik oder im Maschinenbau immer häufiger gefordert werden. Die Zeitsynchronisation ist somit Voraussetzung nahezu aller Echtzeit-Anwendungen in Kommunikationssystemen.

Zur zyklischen Zeitsynchronisation wird häufig der IEEE1588-Standard eingesetzt. Er hat den Titel "Precision Clock Synchronization Protocol for Networked Mesurement and Control Systems", abgekürzt "PTP" für "Precision Time Protocol". Dieser Standard definiert ein Verfahren, um viele räumlich verteilte Echtzeituhren zu synchronisieren, die über ein paketfähiges Netzwerk, wie das Ethernet, miteinander verbunden sind. Gemäß PTP etabliert sich ein Teilnehmer als Masteruhr und sendet ein erstes softwaregeneriertes Sync-Telegramm und nachfolgend ein Follow up-Telegramm mit der Angabe des genauen Zeitpunkts des ersten Telegramms an die übrigen Teilnehmer (Slaves). Der Empfänger-Teilnehmer kann auf der Basis des ersten Telegramms sowie des Follow up-Telegramms und seiner eigenen Uhr die Zeitdifferenz zwischen seiner Uhr und der Masteruhr berechnen und somit eine Synchronisation vornehmen. Dieser Synchronisatinsprozess wiederholt sich im Sync-Telegramm-Takt.

Eine weitere bekannte Methode ist die zyklische Übertragung der absoluten Zeitinformation (z.B. SYNAX-Verbund) zur Zeitsynchronisation bei schwacher zeitlicher Übertragungsverzögerung.

Die bisherigen, teils mit komplizierten Mechanismen arbeitenden Lösungen synchronisieren zyklisch die Zeitinformationen in den Teilnehmern durch aktive Übertragung von absoluten Zeitinformationen. Die Erfindung schlägt ein vereinfachtes Zeitsynchronisationsverfahren in zyklisch arbeitenden Kommunikationssystemen vor.

Vorteile der Erfindung

Beim erfindungsgemäßen Synchronisationsverfahren wird eine absolute Zeitinformation zur Initialisierung gleichzeitig an alle zu synchronisierenden Teilnehmer des Kommunikationssystems übertragen, wobei zumindest nach einem Zyklus (oder nach mehreren Zyklen) bekannter Zykluszeit jeweils eine Synchronisation durch Neuberechnung der lokalen Uhrzeit jedes zu synchronisierenden Teilnehmers aus der Kenntnis der absoluten Zeitinformation und der jeweiligen Zykluszeiten erfolgt. Somit wird nur einmal zur Initialisierung die absolute Zeitinformation übertragen und anschließend die Zeit dezentral driftfrei mitgeführt. Die absolute Zeitinformation muss einmal gleichzeitig an alle Stationen (Teilnehmer) übertragen werden. Danach läuft die Uhrzeit in allen Stationen synchron durch dezentrale Mechanismen, ohne dass eine erneute Übertragung stattfinden muss. Diese Mechanismen beschränken sich auf einfache Rechenoperationen. Es ist zweckmäßig, ausgehend von der übertragenen Absolutzeit (absoluten Zeitinförmation) die lokale Uhrzeit nach jedem Zyklus durch Addieren der bekannten Zykluszeit zur Absolutzeit (erster Schritt) bzw. auf die zuletzt berechnete Uhrzeit (n-ter Schritt) neu zu berechnen.

In einer anderen Ausgestaltung kann die Berechnung derart erfolgen, dass bei jeder Neuberechnung von der Absolutzeit ausgegangen wird, zu der die bekannten Zykluszeiten der bis dato erfolgten, also seit der Initialisierung hinzugekommenen Zyklen hinzuaddiert werden.

Es ist festzuhalten, dass die Erfindung auch bei variablen Zykluszeiten anwendbar ist, solange die Zykluszeiten selbst in den Teilnehmern bekannt sind.

Es sei darauf hingewiesen, dass mit den Begriffen "absolute Zeitinformation" und "lokale Uhrzeit" nicht unbedingt die klassische Uhrzeit gemeint sein muss. Die Begriffe meinen jede mögliche Form von Zeitinformation, sei es ein Datum, eine Uhrzeit oder eine fortlaufende Aufzählung (inkrementierende oder dekrementierende Folge von Zahlen), z. B. die Aufsummierung der Zyklen (Zyklenanzahl). Unter absoluter Zeitinformation ist somit im Rahmen vorliegender Anmeldung eine initialisierende Zeitinformation der genannten Art gemeint, die als Grundlage der weiteren Zeitzählung bzw. Zeitberechnung dient. Diese absolute Zeitinformation wird zur Initialisierung der Zeitsynchronisation an alle zu synchronisierenden Teilnehmer gleichzeitig übertragen, wobei im Rahmen vorliegender Anmeldung davon ausgegangen wird, dass für die Kommunikationsqualität keine oder nur vernachlässigbar laufzeitbehafteten Strecken vorliegen, so dass mit ausreichender Genauigkeit auch von einem gleichzeitigen Empfang der absoluten Zeitinformation bei den Teilnehmern gesprochen werden kann.

Es ist zweckmäßig, wenn einer der Teilnehmer des Kommunikationssystems die Rolle eines Zeitreferenzmasters übernimmt, der besagte absolute Zeitinformation an die übrigen Teilnehmer verschickt. Es existieren aber auch andere Kommunikationssysteme (NTP, GPS), in denen mehrere Taktgeber sich untereinander synchronisieren und als Zeitreferenzmaster fungieren. Es sind auch, speziell in der Aütomatisierungstechnik, Fälle denkbar, in denen sich eine Steuerung als Zeitreferenzmaster etabliert, zu der sich andere Steuerungen synchronisieren, wiederum andere von einer dieser Steuerungen abhängige Elemente untersynchronisieren sich dann bzgl. der ihnen zugeordneten Steuerung.

Die Übersendung der absoluten Zeitinformation erfolgt zweckmäßigerweise als Global-Telegramm in Form eines Broadcast, der alle Teilnehmer erreicht. Kommunikationssysteme in der Automatisierungstechnik arbeiten üblicherweise mit einem Kommunikationsmaster, der ansagt, wann welche Zeit sein wird, so dass die übrigen Teilnehmer ihre lokale Uhrzeit beim Eintreffen eines entsprechenden Signal auf die entsprechende Uhrzeit stellen können. Erfindungsgemäß können diese Teilnehmer anschließend beim zyklischen Eintreffen der Sync-Telegramme ihre lokalen Uhrzeiten entsprechend der bekannten Zykluszeiten neu setzen.

Zur Zeitsynchronisation gemäß Erfindung ist es notwendig, dass ein zyklisches synchronisierendes Ereignis das System durchläuft, wobei hierzu bspw. Sync-Telegramme verwendet werden können.

Es ist auch möglich, die Synchronisation mehrfach pro Zykluszeit gemäß einem vorgegebenen Raster (vgl. Feininterpolation) vorzunehmen.

Ein erfindungemäß ausgestalteter Teilnehmer eines zyklisch arbeitenden Kommunikationssystems weist eine Recheneinheit auf, die zur Zeitsynchronisation derart ausgelegt ist, dass nach Empfang einer absoluten Zeitinformation zumindest nach einem oder mehreren Zyklen bekannter Zykluszeit die lokale Uhrzeit des Teilnehmers neu berechnet wird. Die Möglichkeiten der Berechnung wurden bereits oben geschildert. Die. Recheneinheit kann eine im Teilnehmer bereits vorhandene CPU sein.

Eine derartig ausgelegte Recheneinheit des Teilnehmers des zyklisch arbeitenden Kommunikationssystems ermöglicht die Implementation des oben beschrieben erfindungsgemäßen. Verfahrens.

Ein erfindungsgemäßes Kommunikationssystem weist die beschriebenen Teilnehmer als zeitlich zu synchronisierende Stationen auf.

### Figurenbeschreibung

Im Folgenden soll die Erfindung und deren Vorteile anhand eines in den Figuren dargestellten Ausführungsbeispiels näher erläutert werden.

Es zeigt
- Figur 1: ein zyklisch arbeitendes Kommunikationssystem in schematischer Darstellung mit dem erfindungsgemäßen Schritt der Initialisierung der echtzeitfähigen Kommunikation (Figur 1A) und der nachfolgenden erfindungsgemäßen Synchronisation (Figur 1B),
- Figur 2: ein Zeitdiagramm zur Veranschaulichung der erfindungsgemäßen Zeitsynchronisation, wobei Figur 2A den Ausgang eines sich als Kommunikationsmaster etablierten Teilnehmers, Figur 2B den Eingang eines zu synchronisierenden Teilnehmers darstellt,
- Figur 3: ein Kommunikationssystem mit einer Hierarchie.

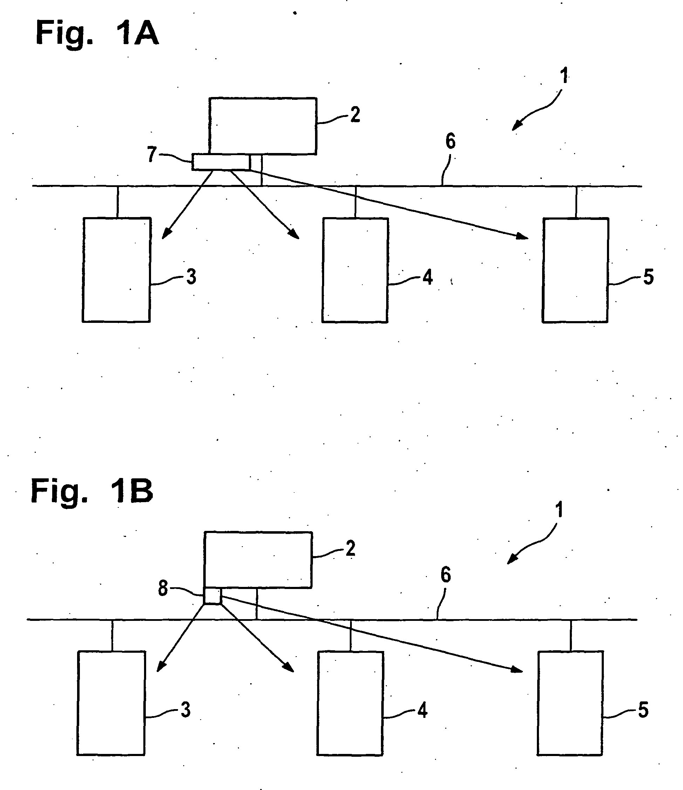

Die Figur 1 zeigt die Prinzipien eines erfindungsgemäßen Kommunikationssystems 1 zur Umsetzung einer echtzeitfähigen Kommunikation zwischen den Teilnehmern 2, 3, 4, 5 des Kommunikationssystems 1. Die Teilnehmer 2, 3, 4 und 5 sind über eine physikalische Übertragungsebene 6 miteinander verbunden. Ein Beispiel eines in Figur 1 dargestellten Kommunikationssystems 1 stellt das Ethernet oder das SERCOS interface dar. In dem dargestellten Ausführungsbeispiel etabliert sich ein Teilnehmer 2 als Kommunikationsmaster, so dass die übrigen Teilnehmer 3, 4 und 5 als Kommunikationsslaves fungieren. Im dargestellten Beispiel kann der Kommunikationsmaster 2 ein gewöhnlicher PC sein, die übrigen Teilnehmer können z. B. Steuerungen, SPSen (Speicherprogrammierbare Steuerungen) oder Sensoren bzw. Aktoren sein. Typisches Einsatzgebiet des dargestellten Kommunikationssystems 1 ist auf dem Gebiet der Automatisierungstechnik.

Figur 1A zeigt den ersten Schritt der Initialisierung der erfindungsgemäßen Zeitsynchronisation, bei der zunächst ein Datentelegramm 7 gleichzeitig an die zu synchronisierenden Teilnehmer 3, 4 und 5 vom Kommunikationsmaster 2 als Zeitreferenzmaster übertragen wird. Dieses Datentelegramm 7 enthält eine absolute Zeitinformation oder anders ausgedrückt, eine Zeitreferenz mit Zeitinformation. Beispielsweise enthält das Datendiagramm die Angabe des Tagesdatums sowie einer auf Millisekunden genauen Uhrzeit. Wie bereits oben ausgeführt, kann die absolute Zeitinformation auch lediglich eine beliebige Zahl darstellen, von der aus die weitere Zeitzählung erfolgt. Beispielsweise kann die Zeitzählung die Zählung der Zyklen im Kommunikationssystem darstellen.

Figur 1B zeigt schematisch die auf die Initialisierung folgenden Schritte, in denen jeweils vom Kommunikationsmaster 2 eine Zyklusinformation an die zu synchronisierenden Teilnehmer 3, 4 und 5 gesendet wird.

In zyklisch arbeitenden Kommunikationssystemen 1 sind solche Zyklusinformationen als Sync-Telegramme 8 vorhanden. Die Zykluszeit, nach der jeweils ein solches Sync-Telegramm 8 versendet wird, ist den Teilnehmern 3, 4 und 5 ebenfalls bekannt. Nach der Initialisierung kann also durch einfache Addition der Zykluszeit zur übersandten Zeitreferenz (absolute Zeitinformation) die lokale Uhrzeit eines jeden Teilnehmers 3, 4, 5 neu berechnet werden. Die Uhren der Teilnehmer 3, 4, 5 sind dann wieder synchronisiert.

Typische Zykluszeiten betragen 0,1 bis 100 ms, insbesondere 1 bis 10 ms. Es sei darauf hingewiesen dass bei der vorliegenden Erfindung auch variable Zykluszeiten im Kommunikationssystem möglich sind, solange die jeweilige Zykluszeit in allen Stationen (Teilnehmern) bekannt ist. Die absolute Zeitinformation (Zeitreferenz) wird gleichzeitig an die Teilnehmer 3, 4, 5 versandt (Broadcast). Hierbei kann davon ausgegangen werden, dass keine Laufzeitverzögerung auftritt, bzw. dass die Laufzeitverzögerung für die nachfolgende Zeitsynchronisation vernachlässigbar ist, so dass im Ergebnis angenommen werden kann, dass die absolute Zeitinformation die zu synchronisierenden Teilnehmer 3, 4, 5 gleichzeitig erreicht.

Aus der schematischen Darstellung gemäß Figur 1 (und 2) geht anschaulich ein Vorteil der vorliegenden Erfindung hervor, der darin besteht, dass im Vergleich zu bisher üblichen Zeitsynchronisationen nicht nach jedem Zyklus eine absolute Zeitinformation (Datentelegramm 7) an die übrigen Teilnehmer versandt werden muß. Das Lesen eines solchen Datentelegramms kann Hard- oder Softwaretechnisch gelöst werden, gestaltet sich jedoch aufwendiger und zeitintensiver als das Registrieren eines Taktgebersignals (Sync-Telegramm 8), so dass erfindungsgemäß die zeitsynchronisation dezentral driftfrei ausgeführt werden kann.

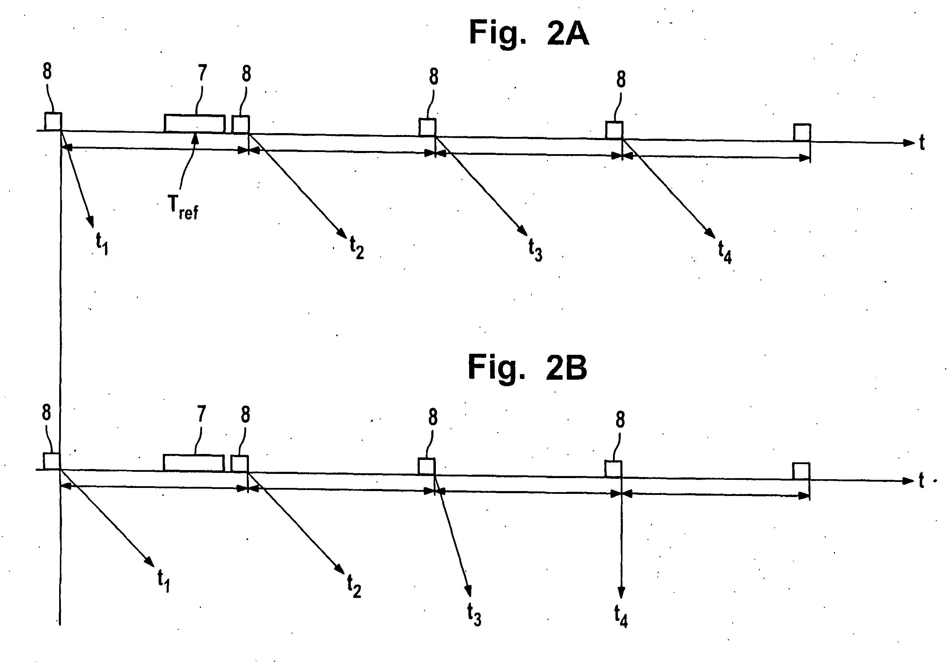

Figur 2 stellt zwei Zeitdiagramme gegenüber, wobei Figur 2A das Zeitdiagramm des Ausgangs des Kommunikationsmasters 2 und Figur 2B das Zeitdiagramm des Eingangs eines Kommunikationsslaves, also eines zu synchronisierenden Teilnehmers 3, 4, 5 darstellt. Bzgl. der Begrifflichkeiten nimmt Figur 2 Bezug auf Figur 1, gleiche Bezugszeichen bezeichnen gleiche Elemente.

Bei dem in Figur 2 dargestellten Beispiel der Zeitsynchronisation wird vom Zeitreferenzsender, in diesem Beispiel gleich dem Kommunikationsmaster bzw. Synchronisationssignalsender, in bestimmten Intervallen, deren Abstand einer festen Zykluszeit entspricht, ein Synchronisationstelegramm (Sync-Telegramm 8) an alle übrigen Teilnehmer des Kommunikationssystems gesendet. Die entsprechenden Zeitpunkte sind mit t₁, t₂, t₃, t₄ etc. bezeichnet. Zwischen den Zeitpunkten t₁ und t₂ wird zur Initialisierung ein Datentelegramm 7 übertragen, das in diesem Beispiel eine Zeitreferenz des Formats "2000-04-01, 16:05:30,123" darstellt. Nach dieser Initialisierung überträgt der Zeitreferenzsender, hier der Kommunikationsmaster 2 (vergleiche Figur 1) lediglich Sync-Telegramme 8 entsprechend den Kommunikationszyklen, also zu den erwähnten Zeitpunkten t₁, t₂, t₃ und so fort. Die Zykluszeit beträgt in diesem Ausführungsbeispiel 10ms.

Figur 2B zeigt das Zeitdiagramm des Eingangs eines Kommunikationsslaves, d.h. eines der Teilnehmer 3, 4, 5. Zwischen den Zeitpunkten t₁ und t₂ zur Zeit T_{ref} erhält der Kommunikationsslave das Datentelegramm 7 mit der Zeitreferenz "2000-04-01, 16:05:30,123". Die Recheneinheit dieses Teilnehmers (Kommunikationsslave) ist derart ausgelegt, dass nach Empfang dieser das Datentelegramm 7 darstellenden absoluten Zeitinformation zur nächsten Zykluszeit t₂ die lokale Uhrzeit dieses Teilnehmers neu berechnet wird. In diesem Ausführungsbeispiel wird folglich die bekannte Zykluszeit vom 10ms zum Zeitpunkt t₂ auf die absolute Zeitinformation im Datentelegramm 7 hinzuaddiert, so dass die neu berechnete lokale Uhrzeit des Kommunikationsslave zum Zeitpunkt t₂ lautet: "2000-04-01, 16:05:30,133".

Wie an diesem Beispiel veranschaulicht wird, ist es zur erfindungsgemäßen Zeitsynchronisation lediglich notwendig, dass das initialisierende Datentelegramm 7 die Teilnehmer 3, 4, 5 innerhalb des Intervalls von t₁ bis t₂ erreicht.

Die weiteren Schritte des Zeitsynchronisation laufen analog dem bereits geschilderten Vorgang ab, so dass zum Zeitpunkt t₃ die lokale Uhrzeit des Kommunikationsslave lautet: "2000-04-01, 16:05:30,143", zum Zeitpunkt t₄: "2000-04-01, 16:05:30,153", und so fort.

Im in Figur 2 dargestellten Ausführungsbeispiel erfolgt somit zu jeder Zykluszeit, also alle 10ms eine Synchronisation, die in dem in Figur 1 dargestellten Kommunikationssystem eine Echtzeitkommunikation ermöglicht. Eine solche Echtzeitkommunikation ist in der Automatisierungstechnik von enormer Wichtigkeit.

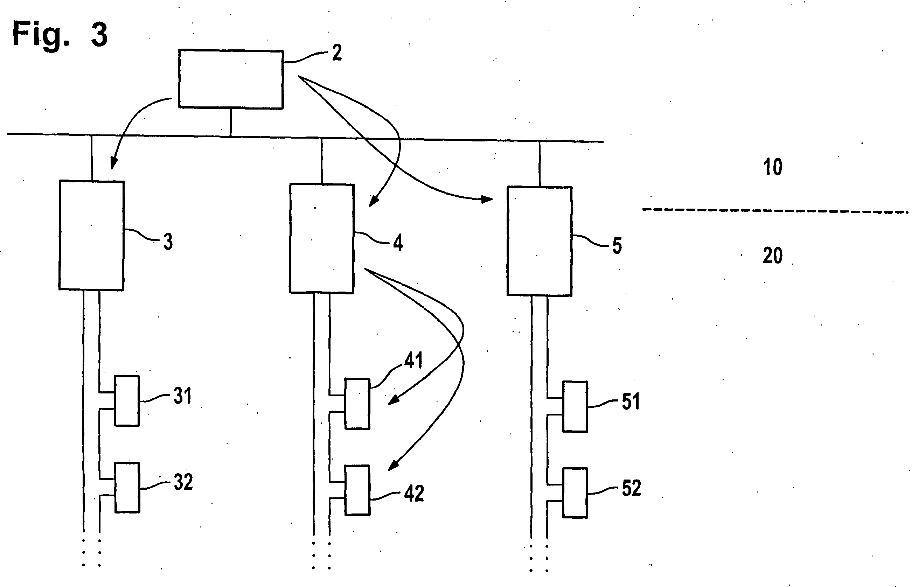

Figur 3 zeigt ein Kommunikationssystem mit Hierarchie, wobei zwei Hierarchieebenen 10 und 20 dargestellt sind. Die Hierarchieebene 10 umfaßt die echtzeitfähige Kommunikation unter den Teilnehmern 2, 3, 4 und 5, die Hierarchieebene 20 umfaßt jeweils die Teilnehmer 3, 4 und 5 mit jeweils untergeordneten Teilnehmern 31, 32 bzw. 41, 42 bzw. 51, 52. Unter den Teilnehmern 3, 31 und 32 erfolgt eine sogenannte Untersynchronisation, d.h. die Teilnehmer 31 und 32 synchronisieren sich zusammen mit dem Teilnehmer 3, entsprechend synchronisieren sich die Teilnehmer 41 und 42 mit dem Teilnehmer 4 und die Teilnehmer 51 und 52 mit dem Teilnehmer 5. Die dargestellten Pfeile deuten die Hierarchie- oder Synchronisationsebenen an. Bei den Teilnehmern 3, 4 und 5 kann es sich, wie bereits erwähnt, um Hardwaresteuerungen oder speicherprogrammierbare Steuerungen handeln, während es sich bei den jeweiligen Unterteilnehmern um Sensoren und Aktuatoren, wie z. B. Antriebe und dergleichen handeln kann, die von der jeweils übergeordneten Steuerung angesteuert werden. Bzgl. der untergeordneten Teilnehmer 31, 32 fungiert Teilnehmer 3 als Kommunikationsmaster, entsprechendes gilt für die übrigen Stränge in der Hierarchieebene 20.

Das erfindungsgemäße Verfahren zur Zeitsynchronisation ermöglicht eine dezentrale, schnelle und driftfreie Synchronisation von Teilnehmern in zyklisch arbeitenden Kommunikationssystemen und ermöglicht somit eine fehlerfreie Echtzeitkommunikation unter den Teilnehmern, wie sie insbesondere für die Automatisierungstechnik von enormer Bedeutung ist.

## Patentansprüche

1. Verfahren zur Zeitsynchronisation von über ein zyklisch arbeitendes Kommunikationssystem (1) verbundenen Teilnehmern (2, 3, 4, 5), wobei eine Zeitinformation an die zu synchronisierenden Teilnehmer (2, 3, 4, 5) übertragen wird,
**dadurch gekennzeichnet, dass**
zur Initialisierung nur einmal eine absolute Zeitinfortnation gleichzeitig an alle zu synchronisierenden Teilnehmer (2, 3, 4, 5) übertragen wird, und dass zumindest nach einem oder mehreren Zyklen bekannter Zykluszeit jeweils eine Synchronisation durch Neuberechnung der lokalen Uhrzeiten der Teilnehmer (2, 3, 4, 5) aus der absoluten Zeitinformation und der Zykluszeit erfolgt.

2. Verfahren nach Anspruch 1, **dadurch gekennzeichnet, dass** die absolute Zeitinformation von einem der Teilnehmer (2) des Kommunikationssystems (1) an die übrigen zu synchronisierenden Teilnehmer (3, 4, 5) übertragen wird.

3. Verfahren nach Anspruch 1 oder 2, **dadurch gekennzeichnet, dass** die lokale Uhrzeit nach jeweils einem Zyklus durch Addieren der bekannten Zykluszeit zur zuletzt berechneten Uhrzeit neu berechnet wird.

4. Verfahren nach Anspruch 1 oder 2, **dadurch gekennzeichnet, dass** bei jeder Neuberechnung der lokalen Uhrzeit von der mit der Initialisierung übertragenen absoluten Zeitinformation ausgegangen wird, zu der die bekannten Zykluszeiten der bis dato erfolgten Zyklen hinzuaddiert werden.

5. Verfahren nach Anspruch 1 oder 2, **dadurch gekennzeichnet, dass** die lokale Uhrzeit.jeweils als Anzahl der bis dato erfolgten Zyklen neu berechnet wird.

6. Verfahren nach einem der Ansprüche 1 bis 5, **dadurch gekennzeichnet, dass** die lokalen Uhrzeiten der zu synchronisierenden Teilnehmer nach einem jeden eintreffenden Sync-Telegramm (8) neu berechnet werden.

7. Verfahren nach einem der Ansprüche 1 bis 6, **dadurch gekennzeichnet, dass** die lokalen Uhrzeiten der Teilnehmer mehrfach pro Zyklus neu berechnet werden.

8. Verfahren nach einem der Ansprüche 1 bis 7, **dadurch gekennzeichnet, dass** zur Initialisierung die absolute Zeitinformation mittels eines Globaltelegramms (7) als Broadcast an die zu synchronisierenden Teilnehmer übertragen wird.

9. Teilnehmer eines zyklisch arbeitenden Kommunikationssystems (1), der eine Recheneinheit aufweist, die zur Zeitsynchronisation derart ausgelegt ist, dass nach Empfang einer absoluten zur Initialisierung nur einmal übertragenen zeitinformation zumindest nach einem oder mehreren Zyklen bekannter Zykluszeit die lokale Uhrzeit des Teilnehmers aus der absoluten Zeitinformation und der Zykluszeit neu berechnet wird.

10. Zyklisch arbeitendes Kommunikationssystem mit einem Teilnehmer gemäß Anspruch 9.

## Claims

1. Method for time synchronization of subscribers (2, 3, 4, 5) connected via a communication system (1) operating cyclically, wherein a time information item is transmitted to the subscribers (2, 3, 4, 5) to be synchronized,
**characterized in that**
for the purpose of initialization, an absolute time information item is transmitted only once simultaneously to all subscribers (2, 3, 4, 5) to be synchronized and **in that** at least after one or several cycles of known cycle time, a synchronization is in each case effected by recalculation of the local clock times of the subscribers (2, 3, 4, 5) from the absolute time information item and the cycle time.

2. Method according to Claim 1, **characterized in that** the absolute time information item is transmitted from one of the subscribers (2) of the communication system (1) to the remaining subscribers (3, 4, 5) to be synchronized.

3. Method according to Claim 1 or 2, **characterized in that** the local clock time is recalculated after in each case one cycle by adding the known cycle time to the clock time last calculated.

4. Method according to Claim 1 or 2, **characterized in that** with each recalculation of the local clock time, the absolute time information item transmitted with the initialization is used as a base to which the known cycle times of the cycles which have occurred until then are added.

5. Method according to Claim 1 or 2, **characterized in that** the local clock time is in each case recalculated as the number of cycles which have occurred until then.

6. Method according to one of Claims 1 to 5, **characterized in that** the local clock times of the subscribers to be synchronized are recalculated after each incoming sync message (8).

7. Method according to one of Claims 1 to 6, **characterized in that** the local clock times of the subscribers are recalculated several times per cycle.

8. Method according to one of Claims 1 to 7, **characterized in that** for the initialization, the absolute time information item is transmitted as a broadcast to the subscribers to be synchronized by means of a global message (7).

9. Subscriber to a cyclically operating communication system (1), who has a computing unit which is designed for time synchronization in such a manner that after receiving an absolute time information item transmitted only once for initialization, the local clock time of the subscriber is recalculated from the absolute time information item and the cycle time at least after one or several cycles of known cycle time.

10. Cyclically operating communication system with a subscriber according to Claim 9.

## Revendications

1. Procédé de synchronisation temporelle de participants (2, 3, 4, 5) reliés à un système de communication cyclique (1), avec transmission d'une information de temps aux participants (2, 3, 4, 5) à synchroniser,
**caractérisé en ce que**
pour initialiser, on envoie seulement une fois une information de temps, absolue, simultanément à tous les participants à synchroniser (2, 3, 4, 5), et
au moins après un ou plusieurs cycles de durée de cycle connue, on effectue une synchronisation par un nouveau calcul des temps d'horloge locaux des participants (2, 3, 4, 5) à partir de l'information de temps absolue et de la durée de cycle.

2. Procédé selon la revendication 1,
**caractérisé en ce que**
l'information de temps, absolue, est transmise par l'un des participants (2) du système de communication (1) aux autres participants (3, 4, 5) à synchroniser.

3. Procédé selon la revendication 1 ou 2,
**caractérisé en ce que**
l'on calcule le temps local d'horloge après chaque fois un cycle, par l'addition du temps de cycle connu au temps d'horloge calculé en dernier lieu.

4. Procédé selon la revendication 1 ou 2,
**caractérisé en ce qu'**
à chaque nouveau calcul du temps local d'horloge, le point de départ est l'information de temps absolu transmise avec l'initialisation et on additionne les temps de cycles connus pour les cycles effectués jusqu'alors à cette information

5. Procédé selon la revendication 1 ou 2,
**caractérisé en ce qu'**
on recalcule le temps local d'horloge chaque fois comme nombre de cycles effectués jusqu'alors.

6. Procédé selon l'une des revendications 1 à 5,
**caractérisé en ce qu'**
on recalcule les temps locaux d'horloge des participants à synchroniser après chaque arrivée d'un télégramme de synchronisation (8).

7. Procédé selon l'une des revendications 1 à 6,
**caractérisé en ce qu'**
on recalcule les temps locaux d'horloge des participants, plusieurs fois par cycle.

8. Procédé selon l'une des revendications 1 à 7,
**caractérisé en ce que**
pour initialiser on transmet l'information de temps absolu à l'aide d'un télégramme global (7) comme émission vers les participants à synchroniser.

9. Participants d'un système de communication (1) cyclique, ayant une unité de calcul conçue pour la synchronisation temporelle de façon qu'après la réception d'une information de temps, absolue, transmise seulement une fois pour l'initialisation, au moins après un ou plusieurs cycles de durée de cycle connu, le temps local d'horloge du participant est recalculé à partir de l'information de temps absolue et de la durée de cycle.

10. Système de communication cyclique comportant un participant selon la revendication 9.
